# EUROPÄISCHE PATENTSCHRIFT

(11) **EP 0 490 049 B1**
(45) Veröffentlichungstag und Bekanntmachung des Hinweises auf die Patenterteilung: **18.10.1995**
(21) Anmeldenummer: 91117423.3
(22) Anmeldetag: 12.10.1991
(51) Int. Cl.: G11B 23/023

(54) **Behälter für Magnetbandkassetten**
Holder for magnetic tape cassettes
Récipient pour cassettes à bande magnétique

(30) Priorität: 14.12.1990 DE 4039954
(43) Veröffentlichungstag der Anmeldung: 17.06.1992
(73) Patentinhaber: fischerwerke Artur Fischer GmbH & Co. KG, D-72178 Waldachtal (DE)
(72) Erfinder: Christoph Stephan, W-7244 Waldachtal-Salzstetten (DE)

(56) Entgegenhaltungen:
- EP-A- 0 171 224
- EP-A- 0 321 937
- EP-A- 0 383 007
- WO-A-87/06210
- DE-A- 2 542 622
- FR-A- 2 059 902
- FR-A- 2 274 107
- US-A- 3 664 492

## Beschreibung

Die Erfindung betrifft einen Behälter mit mehreren durch Bodenplatten voneinander getrennten Aufnahmeräume für Magnetbandkassetten gemäß der Gattung des Anspruches 1.

Aus der DE-PS 22 48 408 sind Aufbewahrungsbehälter für Magnetbandkassetten bekannt, bei denen die Magnetbandkassetten flach auf einen Schieber gelegt werden, der gegen eine Federkraft in das Behältergehäuse einschiebbar ist und nach dem Einschieben verriegelt wird. Am Schieber sind Arretiernocken im Abstand nebeneinander oder bei Längseinschub der Magnetbandkassetten hintereinander angeordnet, die in die Naben der Tonbandspulen der Magnetbandkassetten eingreifen und diese gegen Verdrehen sichern. Die Arretiernocken sind starr ausgebildet, so daß der Schieber entsprechend weit aus dem Gehäuse ausgefahren werden muß, um die Magnetbandkassette von oben zu entnehmen bzw. auf den Schieber aufzulegen.

In der DE-PS 24 62 769 wird ein Behälter für eine Magnetbandkassette gemäß dem Oberbegriff des Patentanspruches 1 vorgeschlagen, bei dem als schwenkbare Kipphebel ausgebildete Arretiereinrichtungen beim Einschieben des Schiebers in die Spulennaben der Magnetbandkassetten ein- und beim Ausfahren des Schiebers wieder ausrasten. Dieses bekannte Funktionsprinzip setzt allerdings voraus, daß der Schieber soweit aus dem Gehäuse ausgefahren wird, daß die Spulennabe zum Ausklinken des Kipphebels freiliegt. Da zur Sicherung des Bandes beide Spulennaben der Kassette arretiert sein müssen, bedeutet dies bei einem Längseinschub der Kassette und hintereinander angeordneten Arretiereinrichtungen, daß der Schieber nahezu vollständig aus dem Gehäuse ausgefahren werden muß. Bei Verwendung der Behälter in Fahrzeugen steht jedoch sehr häufig der Platz für ein derart weites Ausfahren des Schiebers nicht zur Verfügung. Zum anderen erfordert das weite Ausfahren Federelemente mit entsprechend langem Federweg und Schieberkonstruktionen mit dem Ausfahrweg entsprechenden Führungsbahnen. Ferner beruht das Ausrasten bei einer weiteren in der DE-PS- 24 62769 vorgeschlagenen Ausführungsform auf einer vorgegebenen Federwirkung des Kipphebels, der im eingerasteten Zustand ständig unter Spannung steht. Durch Ermüdung verliert sich die Federwirkung, so daß ein sicheres Ausrasten nach einer bestimmten Zeit nicht mehr gewährleistet ist.

Der Erfindung liegt die Aufgabe zugrunde, einen Behälter mit mehreren durch Bodenplatten voneinander getrennten Aufnahmeräume für Magnetbandkassetten zu schaffen, bei dem diese obengenannten Probleme vermieden sind.

Die Lösung dieser Aufgabe ergibt sich aus dem Patentanspruch 1.

Der an dem schwenkbaren Kipphebel seitlich angesetzte Zapfen gleitet beim Ausfahren des Schiebers unter eine an der Bodenplatte angeordnete Nase. Dadurch wird der Kipphebel aus der Spulennabe ausgerastet. Der Weg für das Ausrasten des Kipphebels wird bestimmt vom Abstand des am Kipphebel angesetzten Zapfens zu der an der Bodenplatte angeordneten Nase. Damit ist der Ausrastweg unabhängig vom Ausfahrweg des Schiebers. Es genügt somit, den Schieber soweit auszufahren, daß die Magnetbandkassette gut greifbar ist. Da die Arretiereinrichtungen ausgerastet sind, kann die Kassette durch Herausziehen aus dem Aufnahmeraum entnommen werden.

Beim Einschieben des Schiebers mit aufgelegter Kassette läuft der Zapfen auf einen der Nase entgegengesetzt angeordneten Steg auf und bringt den schwenkbaren Kipphebel in die Einrastposition. Sowohl die Aus- als auch die Einrastposition sind durch die Nasen bzw. Stege fixiert, so daß eine ordnungsgemäße Funktion des Kipphebels als Arretiereinrichtung auch bei häufigem Gebrauch gewährleistet ist.

Für einen Quereinschub der Magnetbandkassette sind die beiden Arretiereinrichtungen nebeneinander, bei Längseinschub hintereinander in Schieberichtung fluchtend angeordnet.

Bei einem Längseinschub der Magnetbandkassette ist es zweckmäßig, daß die Arretiereinrichtungen durch jeweils zwei nebeneinander angeordnete und unabhängig voneinander schwenkbare Kipphebel gebildet sind. Dabei ist jedem Kipphebel zum gemeinsamen Ausrasten eine Nase an der Bodenplatte zugeordnet, während für das Einrasten für die beiden paarweise angeordneten Kipphebel einer Arretiereinrichtung nur jeweils ein Steg zur Verfügung steht. Dieser Steg ist an einem Schiebeelement angeordnet, das in der Bodenplatte gelagert und mit der Magnetbandkassette quer zur Einschubrichtung verschiebbar ist. Diese spezielle Ausbildung für einen Längseinschub einer Magnetbandkassette ermöglicht eine Bandarretierung unabhängig davon, in welcher Lage die Kassette auf den Schieber aufgelegt wird. Die Spulennaben der Kassetten sind nämlich in Längsrichtung der Kassette aus der Mitte versetzt angeordnet, so daß jeweils nur der in gleicher Richtung versetzt sitzende Kipphebel in Eingriff kommt. Da nur jeweils ein Kipphebel durch den am Schiebeelement angeordneten Steg zum Einrasten aufgestellt wird, bleibt der andere Kipphebel in der ausgerasteten Position. Der jeweils passende Kipphebel wird dadurch in Eingriff gebracht, indem das Schiebeelement mit den an ihm angeordneten Stege mit der Magnetbandkassette verschoben wird. Die Verschiebung des Schiebeelementes erfolgt über den an den Kassetten angeordneten Wulst, der auf einen schrägstehenden und die Oberseite der Bodenplatte durchdringenden Anschlagsteg des Schiebeelementes auftrifft.

In weiterer Ausgestaltung der Erfindung kann der Kipphebel einstückig über ein Filmscharnier am Schieber angespritzt, und die Stege und Nasen zur Betätigung des Kipphebels mit Anlaufschrägen versehen sein.

Um die Magnetbandkassette vor Staub und Schmutz zu schützen, ist es zweckmäßig, an den Schieber über Filmscharnier eine verschwenkbare Verschlußklappe anzuordnen, die durch eine zwischen Schieber und Verschlußklappe verspannte Blattfeder in einer geschlossenen und geöffneten Endposition arretierbar ist.

Die Erfindung wird nachfolgend anhand der Zeichnungen näher erläutert.

Es zeigen:
- Figur 1: den Behälter mit mehreren Aufnahmeräumen für Magnetbandkassetten,
- Figur 2: eine Arretiereinrichtung in Seitenansicht und
- Figur 2a: in Draufsicht,
- Figur 3: den Aufnahmeraum für eine längs eingeschobene Magnetbandkassette mit Bodenplatte und ausgefahrenem Schieber,
- Figur 4: den Aufnahmeraum nach Figur 3 bei eingefahrenem Schieber,
- Figur 5: eine Draufsicht auf die Bodenplatte bei eingefahrenem Schieber gemäß Figur 4.

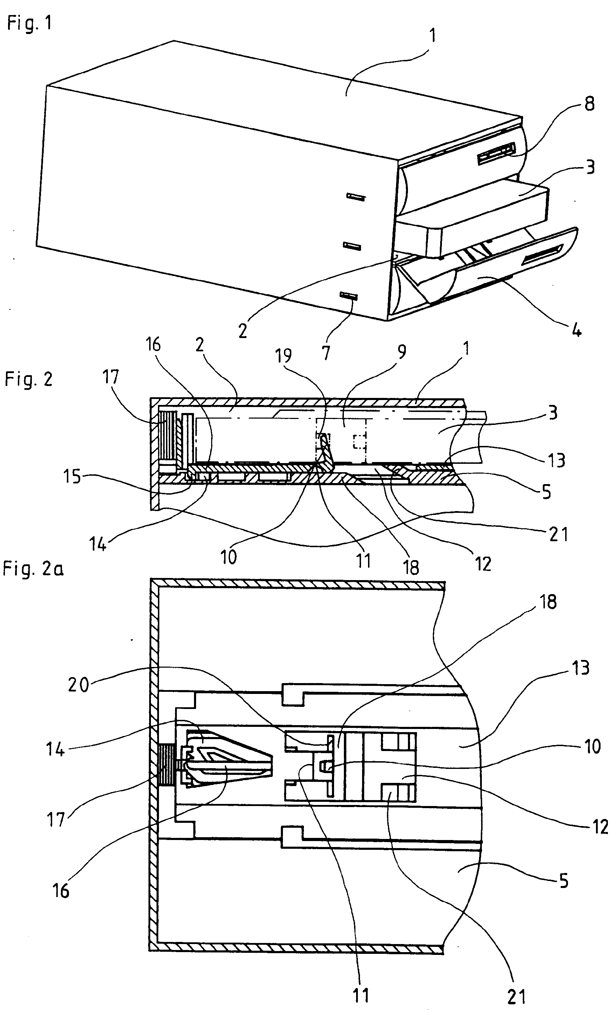

Der in Figur 1 dargestellte Behälter 1 weist drei Aufnahmeräume 2 für Magnetbandkassetten 3 auf, wobei die Verschlußklappe 4 des mittleren Aufnahmeraumes zum Entnehmen der Magnetbandkassette geöffnet ist. Die Aufnahmeräume 2 werden durch Bodenplatten 5 gebildet, die in Schienen der Seitenwände des Behälters 1 eingeschoben und mit Rastnasen 6 in den Durchbrechungen 7 der Seitenwände arretiert sind. Um ohne Öffnen der Verschlußklappe 4 feststellen zu können, ob im Aufnahmeraum 2 eine Kassette eingelegt ist, sind in der Verschlußklappe Fenster 8 angeordnet.

Mit der in Figur 2 und 2a dargestellten Arretiereinrichtung werden die beiden Spulennaben 9 der Magnetbandkassette 3 gegen Verdrehen gesichert. Die Arretiereinrichtungen sind durch einen Kipphebel 10 gebildet, der überein Filmscharnier 11 in einer Aussparung 12 am Schieber 13 angesetzt ist. Der Schieber 13 ist in der Bodenplatte 5 geführt, die zur Unterteilung des Behälters in Aufnahmeräume 2 dient. Am hinteren Ende der Bodenplatte 5 ist eine nutförmige Kurvenbahn 14 eingearbeitet, die in Verbindung mit der am Schieber 13 angeordneten und mit einem Vorsprung 15 in die Kurvenbahn 14 eingreifenden Zunge 16 einen durch Druck auf den Schieber sowohl entriegel- als auch verriegelbaren Schließmechanismus bildet.

In der dargestellten Position ist der Schieber 13 mit der Magnetbandkassette vollständig eingeschoben und unter Verspannung des Federelementes 17 verriegelt. Beim Einschieben des Schiebers 13 ist der Kipphebel 10 auf den an der Bodenplatte 5 angeformten Steg 18 aufgelaufen und dabei in die Verzahnung 19 der Spulennabe 9 der Magnetbandkassette 3 eingerastet. Damit ist ein Verdrehen der Spulennabe verhindert. Wird der Schieber 13 entriegelt und von dem Federelement 17 in die Entnahmeposition bewegt, gleitet der Kipphebel 10 von dem Steg 18 ab und wird durch Unterlaufen der an ihm angeordneten Zapfen 20 unter die gegenüberliegend angeordneten Nasen 21 der Bodenplatte 5 nach unten gedrückt und aus der Spulennabe ausgerastet. Nach dem Ausrasten ist es möglich, die Kassette von Hand vollständig aus dem Aufnahmeraum zu ziehen.

Die in Figur 2 und 2a dargestellte Ausführungsform der Arretiereinrichtung ist sowohl für den Quereinschub der Kassette geeignet, bei der die Arretiereinrichtungen auf einem entsprechend breiten Schieber nebeneinander angeordnet sind, als auch für den Längseinschub, sofern die Kassette stets in gleicher Lage eingeschoben wird.

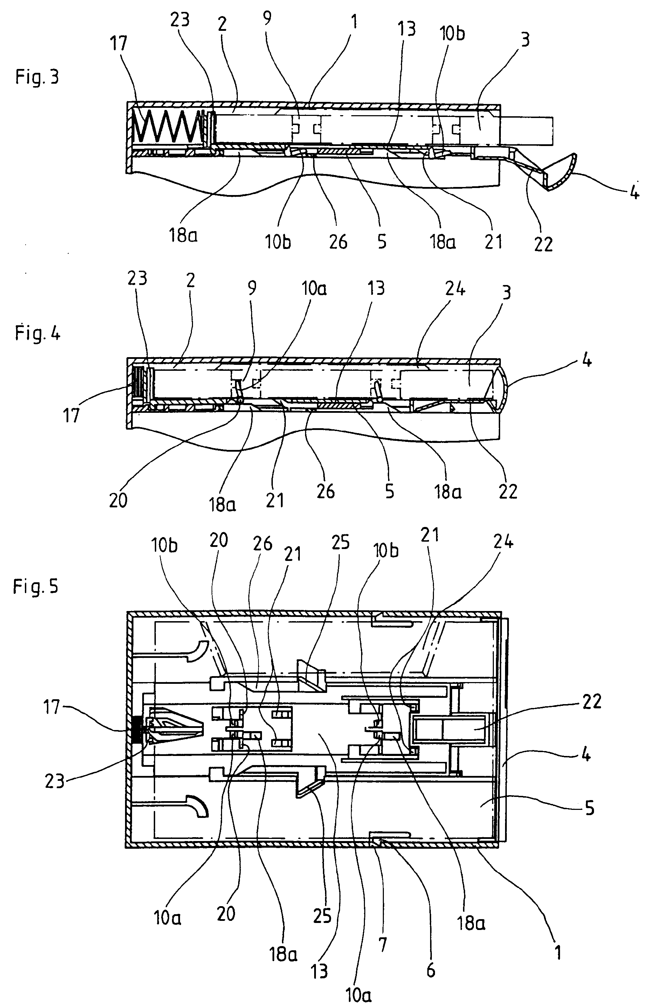

In dem Ausführungsbeispiel nach den Figuren 3 bis 5 ist ein Längseinschub der Kassette 3 in beiden Lagen möglich. Dies wird dadurch erreicht, daß die Arretiereinrichtungen durch jeweils zwei nebeneinander angeordnete und unabhängig voneinander schwenkbare Kipphebel 10a, 10b gebildet sind, an denen jeweils rechtwinklig abstehend die Zapfen 20 angeordnet sind. Beide Kipphebel sind jeweils um das gleiche Maß aus der Mitte versetzt, wie die Spulennaben 9 einer Magnetbandkassette 3. Beim Ausfahren des Schiebers 13 werden alle vier Kipphebel durch die jedem Kipphebel zugeordneten Nasen 21 ausgerastet. Gleichzeitig wird die Kassette vom Schieber 13 in die Entnahmeposition geschoben. Zum Herausziehen der Kassette aus dem Aufnahmeraum 2 wird die von einer abgeknickten Blattfeder 22 in gestreckter Position gehaltene Verschlußklappe 4 nach unten gedrückt. Durch die Abknickung der Blattfeder 22 wird diese Position der Verschlußklappe ebenfalls arretiert.

In Figur 4 und 5 ist der Aufnahmeraum 2 mit eingeschobener Kassette 3 dargestellt. Zunächst wird bei geöffneter Verschlußklappe 4 die Kassette soweit eingeschoben, bis sie an dem am Schieber 13 angeordneten Anschlag 23 anstößt. Beim Einschieben der Kassette wird mit dem an einer Seite befindlichen Kassettenwulst 24 der auf der gleichen Seite liegende Steuerkeil 25 des Schiebeelementes 26 weggedrückt und das Schiebeelement quer zur Einschubrichtung der Kassette in die entgegengesetzte Endposition verschoben. Nach dem Hochklappen der Verschlußklappe 4, die dabei von der Blattfeder 22 wiederum in dieser Schließposition arretiert wird, wird nunmehr der Schieber 13 mit der eingelegten Kassette 3 in den Aufnahmeraum 2 eingeschoben. Durch die Verschiebung des Schiebeelementes 26 wurden auch die beiden am Schiebeelement 26 angeordneten und miteinander fluchtenden Stege 18a soweit verschoben, daß nur die zur Lage der Magnetbandkassette passenden Kipphebel 10a zum Einrasten in die Spulennaben 9 auf die beiden miteinander fluchtenden Stege 18a auflaufen.

## Patentansprüche

1. Behälter mit mehreren durch Bodenplatten voneinander getrennten Aufnahmeräumen für Magnetbandkassetten, wobei auf der Bodenplatte ein verriegelbarer und mit einem Federelement die Magnetbandkassette in eine Entnahmeposition ausfahrbarer Schieber gelagert ist, an dem in die beiden Spulennaben der Magnetbandkassette eingreifende und als schwenkbare Kipphebel ausgebildete Arretiereinrichtungen angeordnet sind, **dadurch gekennzeichnet**, daß die Kipphebel (10, 10a, 10b) seitlich angesetzte Zapfen (20) aufweisen, die beim Ausfahren des Schiebers (13) durch Unterlaufen von an der Bodenplatte (5) angeordneten Nasen (21) den Kipphebel aus der Spulennabe (9) ausrasten, und beim Einschieben des Schiebers (13) durch Auflaufen auf Stege (18,18a) den Kipphebel in die Spulennabe einrasten.

2. Behälterfür den Längseinschub von Magnetbandkassetten mit in Einschubrichtung fluchtenden Arretiereinrichtungen auf dem Schieber nach Anspruch 1, **dadurch gekennzeichnet**, daß die Arretiereinrichtungen durch jeweils zwei nebeneinander angeordnete und unabhängig voneinander schwenkbare Kipphebel (10a, 10b) gebildet sind, wobei jedem Kipphebel zum Ausrasten eine Nase (21) an der Bodenplatte (5) zugeordnet ist, und daß in der Bodenplatte ein mit der Magnetbandkassette quer zur Einschubrichtung verschiebbares Schiebeelement (26) gelagert ist, an dem jeweils ein Steg (18a) für jede Arretiereinrichtung zum Einrasten eines der beiden Kipphebel einer Arretiereinrichtung angeordnet ist.

3. Behälter nach Anspruch 2, **dadurch gekennzeichnet**, daß an den beiden Längsseiten des Schiebeelementes (26) die Bodenplatte (5) durchdringende und deren Oberseite überragende Steuerkeile (25) zum Verschieben des Schiebeelementes mit dem Kassettenwulst (24) angeordnet sind.

4. Behälter nach einem der vorhergehenden Ansprüche, **dadurch gekennzeichnet**, daß der Kipphebel (10, 10a, 10b) mit einem Filmscharnier (11) am Schieber (13) angesetzt ist.

5. Behälter nach einem der vorhergehenden Ansprüche, **dadurch gekennzeichnet**, daß die Stege (18, 18a) und Nasen (21) mit Anlaufschrägen versehen sind.

6. Behälter nach einem der vorhergehenden Ansprüche, **dadurch gekennzeichnet,** daß an dem Schieber (13) über Filmscharnier eine verschwenkbare Verschlußklappe (4) angeordnet ist, die durch eine zwischen Schieber (13) und Verschlußklappe (4) verspannte Blattfeder (22) in einer gestreckten und abgeklappten Endposition arretierbar ist.

## Claims

1. A container having several receiving compartments for magnetic tape cassettes, separated from one another by base plates, a lockable slider member which can be ejected by means of a spring element into a position in which the magnetic tape cassette can be removed being arranged on the base plate, on which slider member resilient locking devices in the form of pivotable rocker arms that engage the two reel hubs of the magnetic tape cassette are arranged, characterized in that the rocker arms (10, 10a, 10b) have laterally mounted pegs (20) which, as the slider member (13) is ejected, disengage the rocker arm from the reel hub (9) by running beneath projections (21) arranged on the base plate (5) and, as the slider member (13) is inserted, engage the rocker arm in the reel hub by running onto elevations (18, 18a).

2. A container for the longitudinal insertion of magnetic tape cassettes with locking devices aligned in the insertion direction on the slider member according to claim 1, characterized in that each locking device is formed by two rocker arms (10a, 10b) arranged side by side and pivotable independently of one another, a projection (21) on the base plate (5) being associated with each rocker arm for disengagement thereof, and that a sliding element (26) displaceable by the magnetic tape cassette transversely to the insertion direction is mounted in the base plate, on which slider member there is arranged a respective elevation (18a) for each locking device for engagement of one of the two rocker arms of a locking device.

3. A container according to claim 2, characterized in that on the two longitudinal sides of the slider element (26) there are arranged wedge-shaped control members (25) penetrating the base plate (5) and projecting above the upper side thereof for displacement of the sliding element by the cassette enlargement (24).

4. A container according to one of the preceding claims, characterized in that the rocker arm (10, 10a, 10b) is attached to the slider member (13) by an integral hinge (11).

5. A container according to one of the preceding claims, characterized in that the elevations (18, 18a) and projections (21) are provided with ramps.

6. A container according to one of the preceding claims, characterized in that on the slider member (13) there is mounted by way of an integral hinge a pivotable closure flap (4) which can be immobilized in an extended and a folded-up position by a leaf spring (22) biassed between the slider member (13) and the closure flap (4).

## Revendications

1. Réceptacle comportant plusieurs espaces récepteurs séparés les uns des autres par des plaques de base et destinés à des cassettes de bandes magnétiques, un tiroir verrouillable et susceptible de faire sortir la cassette de bande magnétique jusque dans une position de prélèvement, au moyen d'un élément formant ressort, étant monté sur la plaque de base, sur lequel tiroir sont disposés des dispositifs de blocage pénétrant dans les deux moyeux de bobines de la cassette de bande magnétique, et conformés en leviers basculants susceptibles de pivoter, caractérisé en ce que les leviers basculants (10, 10a, 10b) présentent des ergots (20) placés latéralement qui, lors de la sortie du tiroir (13) désencliquètent le levier basculant du moyeu (9) de bobine en passant sous des dents (21) disposées sur la plaque (5) de base, et qui lors de l'enfilage du tiroir (13) encliquètent le levier basculant dans le moyeu de bobine en montant sur des barrettes (18, 18a).

2. Réceptacle destiné à l'enfilage dans le sens longitudinal de cassettes de bandes magnétiques, comportant sur le tiroir selon la revendication 1 des dispositifs de blocage en alignement dans la direction d'enfilage, caractérisé en ce que les dispositifs de blocage sont constitués de deux leviers basculants (10a, 10b) susceptibles de pivoter indépendamment l'un de l'autre et disposés l'un à côté de l'autre, une dent (21) située sur la plaque de base (5) étant affectée à chaque levier basculant en vue du désencliquetage, et en ce que dans la plaque de base est monté un élément coulissant susceptible d'être déplacé par la cassette de bande magnétique transversalement à la direction d'enfilage, sur lequel est disposée, pour chaque dispositif de blocage, une barrette (18a) en vue de l'encliquetage de l'un des deux leviers basculants d'un dispositif de blocage.

3. Réceptacle selon la revendication 2, caractérisé en ce que des coins de commande (25) traversant la plaque de base (5) sur les deux côtés longitudinaux de l'élément coulissant (26) et faisant saillie au-dessus de la surface supérieure de celle-ci, sont disposés en vue du déplacement de l'élément coulissant au moyen de la partie renflée (24) de la cassette.

4. Réceptacle selon l'une des revendications précédentes, caractérisé en ce que le levier basculant (10, 10a, 10b) est monté sur le tiroir (13) au moyen d'une charnière (11) réalisée avec une feuille mince souple.

5. Réceptacle selon une des revendications précédentes, caractérisé en ce que les barrettes (18, 18a) et les dents (21) sont munies de rampes d'amorçage.

6. Réceptacle selon l'une des revendications précédentes, caractérisé en ce qu'un abattant de fermeture (4) susceptible d'être mis en pivotement, est disposé sur le tiroir (13) par l'intermédiaire d'une charnière à feuille mince souple, lequel abattant peut être bloqué en position extrême redressée, ou en position extrême abaissée, grâce à un ressort à lame (22) bandé entre le tiroir (13) et l'abattant de fermeture (4).
